# EUROPEAN PATENT APPLICATION

(11) **EP 4 521 371 A1**
(43) Date of publication of application: **12.03.2025**
(21) Application number: 23195384.5
(22) Date of filing: 05.09.2023
(51) Int. Cl.: G07C 9/00, G07C 9/10, G07C 9/25, G07C 9/27, G07C 9/37, G07C 9/38

(54) **AN ACCESS CONTROL SYSTEM AND AN ACCESS CONTROL METHOD**

(71) Applicant: KONE Corporation, 00330 Helsinki (FI)
(72) Inventor: LÖFBERG, Niklas, 00330 Helsinki (FI); LAURILA, Jussi, 00330 Helsinki (FI)
(74) Representative: Berggren Oy

(57) **Abstract**

The invention relates to an access control system (200). The access control system comprises: a projector device (210) configured to project at least two access control lanes (310a, 310b), each access control lane (310a, 310b) comprises an entry zone (410a, 410b) and an exit zone (420a, 420b); a reader support structure (330a, 330b) for each access control lane (310a, 310b), wherein each reader support structure comprises a reader device arrangement (240); a camera device (220); and a control unit (230) configured to control access of users along the two access control lanes (310a, 310b). The control of the access of the users along each access control lane (310a, 310b) comprises that the control unit (230) is configured to: detect a user (710) within the entry zone (410a, 410b) based on the detection data provided by the camera device (220), and control the projector device (210) based on user authorization data relating to the detected user (710) provided by the reader device arrangement (240) of the reader support structure (330a, 330b) of the access control lane (310a, 310b) and/or the detection data provided by the camera device (220). The invention relates also to an access control method.

## Description

### TECHNICAL FIELD

The invention concerns in general the technical field of access control. Especially the invention concerns access control systems.

### BACKGROUND

In various user entry points (i.e. user access points) an access control system may be used for controlling access of users through the user entry points. The access control system enables that only authorized users are allowed to access through the user entry points. Typically, the access control system comprises at least one access gate device, such as a turnstile, a security barrier, or a security gate, for providing access only for the authorized users.

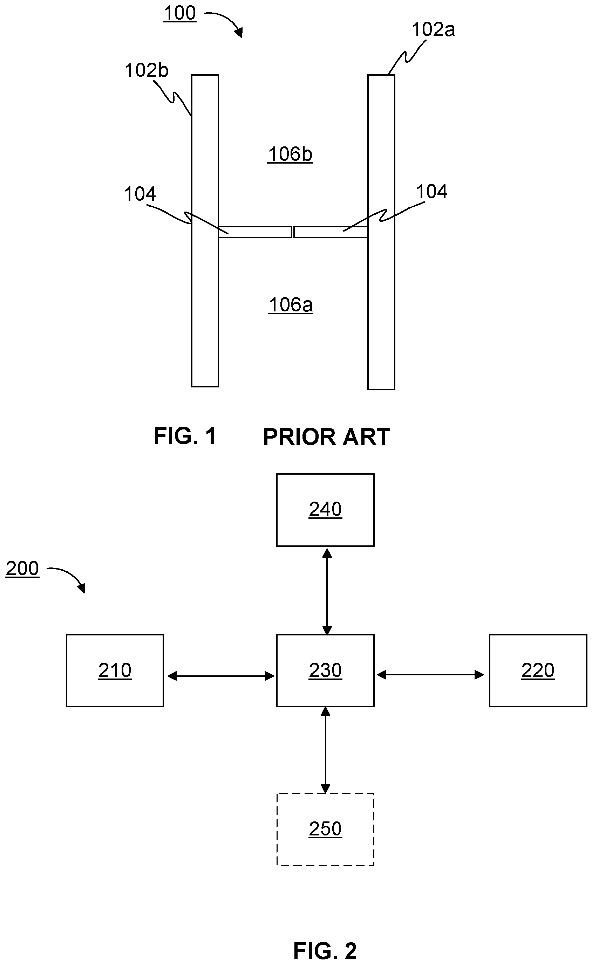

The access gate devices typically use a curtain of light type of sensors to detect a user approaching the access gate device. A user may be granted an access via the access gate device only when the user has been authorized. Figure 1 illustrates an example of a traditional access gate device 100. Figure 1 illustrates a top view of the traditional access gate device 100. The traditional access gate device 100 comprises two parallel side walls, e.g. guide elements, 102a, 102b extending in a horizontal direction, i.e. a depth direction. The curtain of light type sensors are arranged to the side walls 102a, 102b of the access gate device 100 to form typically two or more detection zones on both sides of the access gate device 100. A physical user restriction device 104 may divide the access gate device 100 into the two sides, e.g. into a first side, e.g. an entry side, 106a and a second side, e.g. an exit side, 106b. At least one drawback of the traditional access gate devices may be that the footprint, i.e. the coverage area, of the access gate device 100 is substantially large, which causes that each access gate device requires substantially large space. Moreover, as the sensors and all technology are integrated in the access gate device, it leads to heavy, complex, and expensive structures.

Thus, there is a need to further develop solutions to improve the access control.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present an access control system and an access control method. Another objective of the invention is that the access control system and the access control method improve a space efficiency of the access control system.

The objectives of the invention are reached by an access control system and an access control method as defined by the respective independent claims.

According to a first aspect, an access control system is provided, wherein the access control system comprises: a projector device configured to project at least two access control lanes on a floor, wherein each access control lane comprises an entry zone and an exit zone; a reader support structure for each access control lane, wherein each reader support structure comprises a reader device arrangement configured to provide user authorization data; a camera device configured to provide detection data from the at least two access control lanes; and a control unit configured to control access of users along the two access control lanes, wherein the control of the access of the users along each access control lane comprises that the control unit is configured to: detect a user within the entry zone of the access control lane based on the detection data provided by the camera device, and control the projector device based on user authorization data relating to the detected user provided by the reader device arrangement of the reader support structure of the access control lane and/or the detection data provided by the camera device.

The controlling the projector device may comprise that the control unit is configured to: control the projector device to project access granted guidance on the floor at the exit zone of the access control lane, if the user authorization data indicates that the detected user is an authorized user; control the projector device to project access denied guidance on the floor at the exit zone of the access control lane, if the user authorization data indicates that the detected user is an unauthorized user; or control the projector device to project the access denied guidance on the floor at the exit zone of the access control lane, if the detected user is further detected to entry into the exit zone of the access control lane based on the detection data provided by the camera device and the user authorization data is not provided by the reader device arrangement of the reader support structure of the access control lane.

Alternatively or in addition, each reader support structure may further comprise a restriction device for restricting access of unauthorized users into the exit zone of the respective access control lane, and wherein the control of the access along each access control lane may comprise that the control unit is further configured to control the restriction device based on the user authorization data relating to the detected user provided by the reader device arrangement of the reader support structure of the access control lane.

The controlling the restriction device may comprise that the control unit is configured to: control the restriction device to allow access for the detected user into the exit zone of the access control lane, if the user authorization data indicates that the detected user is an authorized user; control the restriction device to restrict access of the detected user into the exit zone of the access control lane, if the user authorization data indicates that the detected user is an unauthorized user; or control the restriction device to restrict access of the detected user into the exit zone of the access control lane, if the user authorization data is not provided by the reader device arrangement of the reader support structure of the access control lane.

Alternatively or in addition, the access control system may further comprise a facial recognition camera device configured to provide facial recognition data for a facial recognition -based identification of the detected user.

Alternatively or in addition, the camera device may be a 2D camera, a time-of-flight (ToF) camera, or a stereo camera.

Alternatively or in addition, the reader device arrangement of each reader support structure may comprise: a quick response (QR) code reader device, a radio frequency identification (RFID) reader device, a near-field communication (NFC) reader device, and/or an identification card (ID card) reader device.

According to a second aspect, an access control method is provided, wherein the access control method comprises: projecting, by a projector device, at least two access control lanes on a floor, wherein each access control lane comprises an entry zone and an exit zone, wherein a reader support structure is arranged for each access control lane, each reader support structure comprises a reader device arrangement for providing user authorization data; providing, by a camera device, detection data from the at least two access control lanes; and controlling, by a control unit, access of users along the two access control lanes, wherein the controlling the access of the users along each access control lane comprises: detecting, by the control unit, a user within the entry zone of the access control lane based on the detection data provided by the camera device; and controlling, by the control unit, the projector device based on user authorization data relating to the detected user provided by the reader device arrangement of the reader support structure of the access control lane and/or the detection data provided by the camera device.

The controlling the projector device may comprise: controlling, by the control unit the projector device to project access granted guidance on the floor at the exit zone of the access control lane, if the user authorization data indicates that the detected user is an authorized user; controlling, by the control unit, the projector device to project access denied guidance on the floor at the exit zone of the access control lane, if the user authorization data indicates that the detected user is an unauthorized user; or controlling, by the control unit, the projector device to project the access denied guidance on the floor at the exit zone of the access control lane, if the detected user is further detected to entry into the exit zone of the access control lane based on the detection data provided by the camera device and the user access data is not provided by the reader device arrangement of the reader support structure of the access control lane.

Alternatively or in addition, the controlling the access of the users along each access control lane may further comprise controlling, by the control unit, a restriction device of the reader support structure based on the user authorization data relating to the detected user provided by the reader device arrangement of the reader support structure of the access control lane.

The controlling the restriction device may comprise: controlling, by the control unit, the restriction device to allow access for the detected user into the exit zone of the access control lane, if the user authorization data indicates that the detected user is an authorized user; controlling, by the control unit, the restriction device to restrict access of the detected user into the exit zone of the access control lane, if the user authorization data indicates that the detected user is an unauthorized user; or controlling, by the control unit, the restriction device to restrict access of the detected user into the exit zone of the access control lane, if the user authorization data is not provided by the access reader device arrangement of the reader support structure of the access control lane.

Alternatively or in addition, the method may further comprise providing facial recognition data, by a facial recognition camera device, for a facial recognition -based identification of the detected user.

Alternatively or in addition, the camera device may be 2D camera, a time-of-flight (ToF) camera, or a stereo camera.

Alternatively or in addition, the reader device arrangement of each reader support structure may comprise: a quick response (QR) code reader device, a radio frequency identification (RFID) reader device, a near-field communication (NFC) reader device, and/or an identification card (ID card) reader device.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a traditional access gate device according to a prior art.
Figure 2 illustrates schematically an example of entities of an access control system.
Figure 3 illustrates schematically an example of the access control system, wherein two access control lanes are projected by a projector device on a floor.
Figure 4 illustrates schematically an example of the entry zones and the exit zones of the two access control lanes.
Figure 5 illustrates schematically an example of a reader device arrangement of a reader support structure.
Figure 6 illustrates schematically an example of the access control system comprising a camera device for producing user detection data from two access control lanes projected by the projection device on the floor.
Figures 7A-7E illustrate schematically example access control situations.
Figure 8 illustrates schematically an example of reader support structures comprising restriction devices.
Figure 9 illustrates schematically a flow chart of an example of an access control method.
Figure 10 illustrates schematically a flow chart of another example of the access control method.
Figure 11 illustrates schematically a flow chart of yet another example of the access control method.
Figure 12 illustrates schematically an example of components of a control unit of the access control system.

### DESCRIPTION OF THE EXEMPLIFYING EMBODIMENTS

Figure 2 illustrates schematically an example of entities of an access control system 200 for controlling access of users through a user entry point. The entry point may locate in an environment, where the access of the users from one area to another area is restricted. Some non-limiting examples of such environments may for example comprise an elevator environment (e.g. an elevator lobby), an airport, a railway station, etc. The access control system 200 enables that only authorized users are allowed to access through the user entry point. An authorized user is a user who is allowed to access through the user entry point. An unauthorized user is a user who is not allowed to access through the user entry point. The user entry point may be approached by the users from two sides, either from a first side, e.g. an entry side, of the user entry point or from a second side, e.g. an exit side, of the user entry point. Although the first side of the user entry point is referred as the entry side and the second side of the user entry point is referred as the exit side, throughout the application, either one of the sides of the user entry point may be used as the entry side and the other side of the user entry point may be used as the exit side.

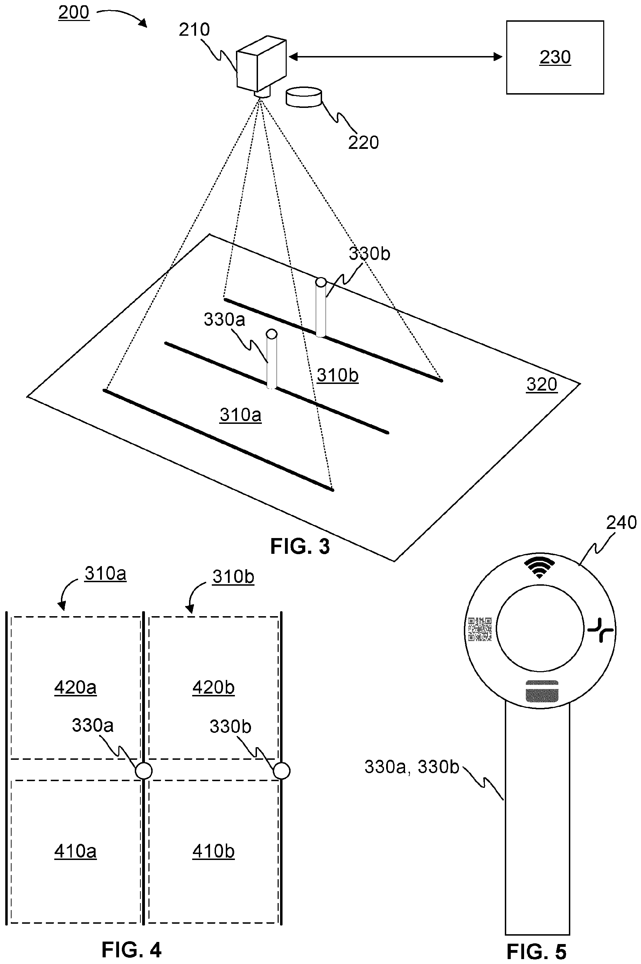

The access control system 200 comprises a projector device 210, a camera device 220, and a control unit 230. The projector device 210 projects at least two access control lanes 31 0a, 310b on a floor 320. The authorized users may access through the user entry point along the at least two access control lanes 310a, 310b from the entry side of the user entry point to the exit side of the user entry point. The access control lanes 310a, 310b may for example be projected on the floor 320 with parallel lines to represent the access control lanes 310a, 310b. Figure 3 illustrates schematically an example of the access control system 200, wherein two access control lanes 310a, 31b are projected by the projector device 210 on the floor 320. However, the number of the access control lanes 310a, 310b is not limed to two and more than two access control lanes 310a, 310b may be projected on the floor 320 by the projector device 210. Each access control lane 310a, 310b comprises a first zone, e.g. an entry zone, 410a, 410b and a second zone, e.g. an exit zone 420a, 420b. The entry zone 410a, 410b of each access control lane 310a, 310b may be on the entry side of the user entry point. The exit zone 420a, 420b of each access control lane 310a, 310b may be on the exit side of the user entry point. Although the first zone 41 0a, 410b is referred as the entry zone and the second zone 420a, 420b is referred as the exit zone, throughout the application, either one of these zones of the access control lane 310a, 310b may be used as the entry zone 410a, 410b and the other zone of the access control lane 310a, 310b may be used as the exit zone 420a, 420b. Figure 4 illustrates schematically an example of the entry zones 410a, 410b and the exit zones 420a, 420b of two access control lanes 310a, 310b. Figure 4 is a top view of the two access control lanes 310a, 310b. According to an example, each access control lane 310a, 310b may further comprise at least one other zone. The at least one other zone may for example comprise a center zone between the entry zone 410a, 410b and the exit zone 420a, 420b. The projector device 210 is communicatively coupled to the control unit 230. The communication between the projector device 210 and the control unit 230 may be based on any known communication technology, either wired or wireless.

The access control system 200 comprises further a reader support structure 330a, 330b for each access control lane 310a, 310b. The projected access control lane 310a, 310n and the respective reader support structure 330a, 330b may be considered to form together an access gate, wherein the reader support structure 330a, 330b is the only physical structure of the access gate. In the examples of Figures 3 and 4, the access control system 200 comprises the reader support structure 330a for the access control lane 310a and the reader support structure 330b for the access control lane 310b. Each reader support structure 330a, 330b may be arranged in a vicinity of the respective access control lane 310a, 310b. Preferably each reader support structure 330a, 330b may be arranged in the vicinity of the respective access control lane 310a, 310b so that the reader support structure 330a, 330b does not disturb substantially the access control lanes 310a, 310b. For example, each reader support structure 330a, 330b may be arranged on one of the sides of the respective access control lane 310a, 310b as illustrated in the examples of Figures 3 and 4. According to an example, each reader support structure 330a, 330b may be arranged between the entry zone 410a, 410b and the exit zone 420a, 420b of the respective access control lane 310a, 310b as illustrated in the example of Figures 3 and 4. According to another example, if the access control lanes 310a, 310b comprise the center zone between the entry zone 410a, 410b and the exit zone 420a, 420b, each reader support structure 330a, 330b may be arranged at the center zone of the respective access control lane 310a, 310b, e.g. on one of the sides of the respective center zone. According to yet another example, each reader support structure 330a, 330b may be arranged at the entry zone 410a, 410b of the respective access control lane 310a, 310b or before the entry zone 410a, 410b of the respective access control lane 310a, 310b. Alternatively, each reader support structure 330a, 330b may be arranged at any other location in the vicinity of the respective access control lane 310a, 310b. The reader support structures 330a, 330b are preferably lightweight structures that do not interfere with the projections generated by the projector device 210 and a field of view of the camera device 220. This enables that the footprint, i.e. the coverage area, of each reader support structures 330a, 330b (i.e. the only physical structure of the access gate) is substantially small, which in turn enables that each reader support structure 330a, 330b requires substantially small space improving the space efficiency of the access control system 200. According to an example, the reader support structures 330a, 330b may be implemented as pole-like support structures as illustrated in the examples of Figure 3. The reader support structures 330a, 330b may for example be arranged on the floor 320. For example, the reader support structures 330a, 330b may be fixedly mounted on the floor 320 or the reader support structures 330a, 330b may be movably arranged on the floor 320. Alternatively, the reader support structures 330a, 330b may be arranged to hang from the ceiling.

Each reader support structure 330a, 330b comprises a reader device arrangement 240 configured to provide user authorization data. Each reader support structure 330a, 330b forwards the provided user authorization data to the control unit 230. The authorization data is used in a user authorization process. In the user authorization process the control unit 230 defines whether the user, to which the provided user authorization data relates, is allowed to access through the user entry point. In the user authorization process the control unit 230 may compare the provided user authorization data for example to prestored access control related data to define whether the provided user authorization data relates to an authorized user (i.e. to a user who is allowed to access through the user entry point) or to an unauthorized user (i.e. to a user who is not allowed to access through the user entry point). The reader device arrangement 510 of each reader support structure 330a, 330b may for example comprise a quick response (QR) code reader device, a radio frequency identification (RFID) reader device, a near-field communication (NFC) reader device, and/or an identification card (ID card) reader device. Figure 5 illustrates schematically a simple example of the reader device arrangement 240 of one reader support structure 330a, 330b. In the example reader device arrangement 240 of Figure 5, each reader device (i.e. the QR code reader, NFC reader, ID card reader, and the RFID reader) of the reader device arrangement 240 is illustrated with a specific symbol. Each reader device arrangement 240 may be communicatively coupled to the control unit 230. The communication between each reader device arrangement 240 and the control unit 230 may be based on any known communication technology, either wired or wireless.

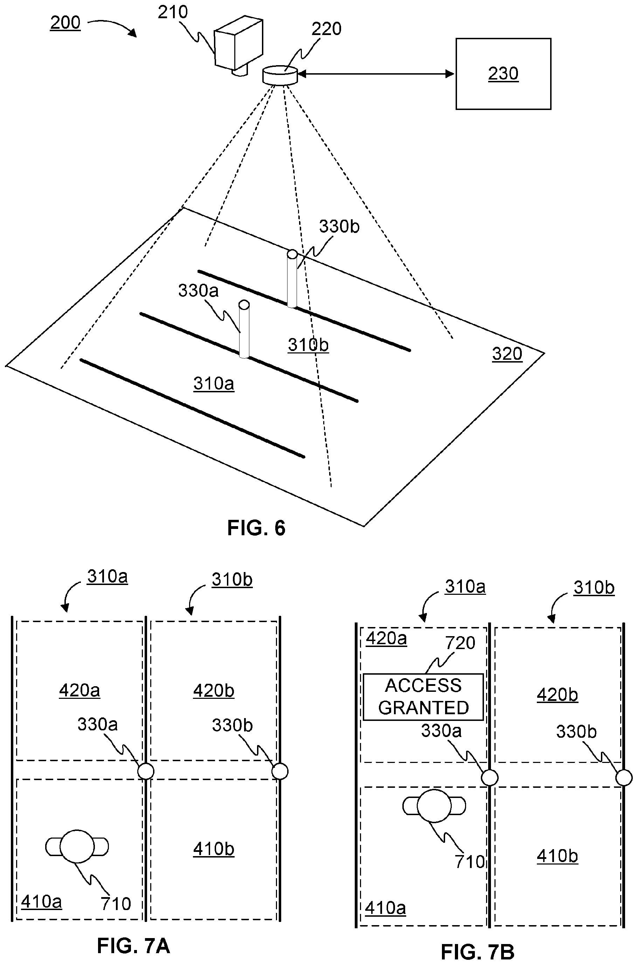

The camera device 220 provides detection data from the at least two access control lanes 310a, 310b. The detection data provided by the camera device 220 may be used to detect users within the at least two access control lanes 310a, 310b as will be described later in this application. The camera device 220 forwards the provided detection data to the control unit 230. Figure 6 illustrates schematically an example of the access control system 200 comprising the camera device 220 for providing the user detection data from the two access control lanes 310a, 310b projected by the projection device 210 on the floor 320. The field of view of the camera device 220 is illustrated in Figure 6 with the dashed lines. The camera device 220 may be a 2D camera or a 3D camera. The detection data provided by the 2D camera may be 2D image data. The 2D image data may comprise at least one 2D image or at least one 2D video image. The detection data provided by the 3D camera may be 3D depth data. The 3D depth data may comprise at least one depth image and/or 3D point cloud data. The 3D camera may for example be a Time-of-Flight (ToF) camera or a stereo camera. The camera device 220 is communicatively coupled to the control unit 230. The communication between the camera device 220 and the control unit 230 may be based on any known communication technology, either wired or wireless.

The projector device 210 and the camera device 220 may be arranged to a ceiling, e.g. to hang from the ceiling. For sake of clarity the ceiling is not shown in Figures 3 and 5. The projector device 210 may be arranged to the ceiling so that it is able to project the at least two access control lanes 310a, 310b on the floor 320. The camera device 220 may be arranged to the ceiling so that it is able to produce the detection data from the at least two access control lanes 310a, 310b. This enables that the detection data from multiple access control lanes 310a, 310b may be produced by one camera device 220. This also improves the space efficiency of the access control system 200. As only the reader arrangement 240 (not the camera device 220 and the projector device 210) is integrated into each reader support structure 330a, 330b, it leads to the simple and lightweight structure.

The control unit 230 controls access of the users through the user entry point along the two access control lanes 310a, 310b projected by the projector device 210. Next the control, by the control unit 230, of the access of a user 710 through the user entry point along one access control lane 310a is described. However, the control of the access of along the other access control lanes 310a, 310b may be performed by the control unit 230 similarly. The implementation of the control unit 230 may be done as a stand-alone control entity or as a distributed control environment between a plurality of stand-alone control entities providing distributed control resource.

The control unit 230 detects a user 710 within the entry zone 410a of the access control lane 310a based on the detection data provided by the camera device 220. Figure 7A illustrates schematically an example access control situation, wherein a user is detected within the entry zone 410a.

In response to the detection of the user 710 within the entry zone 410a of the access control lane 310a, the control unit 230 controls the projector device 210 based on user authorization data relating to the detected user 710 provided by the reader device arrangement 240 of the reader support structure 330a of the access control lane 310a and/or the detection data provided by the camera device 220. The user authorization data may be provided by the reader device arrangement 240 of the reader support structure 330a of the access control lane in response to a user interaction with the detected user 710. For example, the user interaction may comprise that the user 710 presents a credential to the reader device arrangement 240. The credential may for example comprise a QR code -based credential, RFID -based credential, NFC -based credential, and/or ID card -based credential.

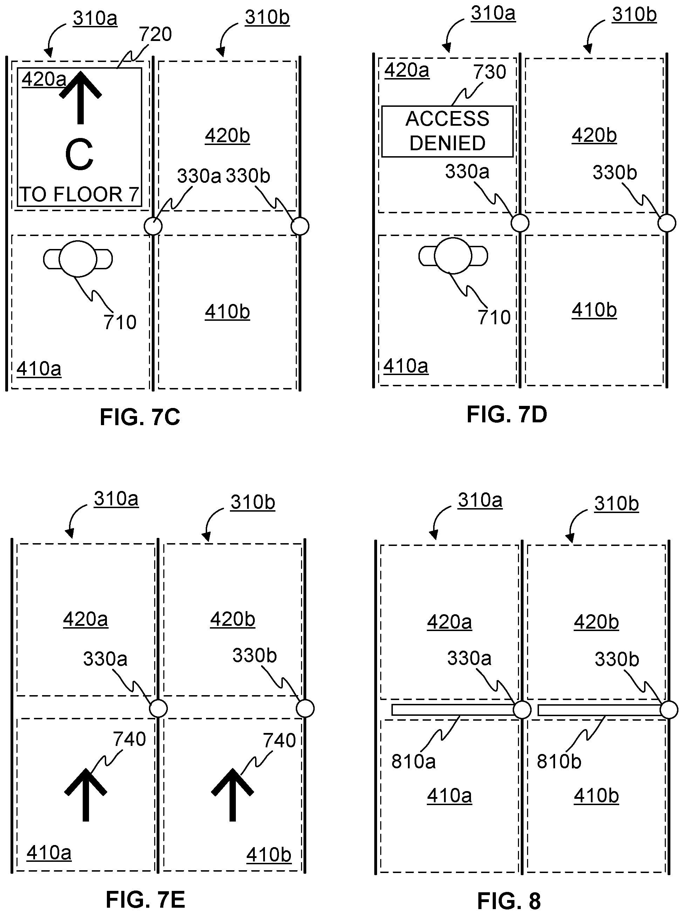

If the user authorization data indicates that the detected user 710 is an authorized user, the control unit 230 may control the projector device 210 to project an access granted guidance 720 on the floor 320 at the exit zone 420a of the access control lane 310a. Figure 7B illustrates schematically an example access control situation, wherein the access granted guidance 720 is projected on the floor 320 at the exit zone 420a of the access control lane 310a. The access granted guidance 720 indicates that the access is granted to the user 710, i.e. the user 710 is allowed to access through the user entry point along the exit zone 420a of the access control lane 310a. The access granted guidance 720 may for example comprise a text indicating the granted access, a pattern indicating the granted access, and/or a color indicating the granted access. For example, the granted guidance may comprise a text "access granted" as illustrated in the example of Figure 7B. Alternatively or in addition, the exit zone 420a may be projected on the floor 320 with a specific color, e.g. green, to indicate the granted access. According to an example, if the access control system 200 is implemented in an elevator environment and an elevator car is allocated for the detected user 710 (e.g. based on the user authorization data), the access granted guidance 720 may comprise the elevator car allocation information. For example, the user authorization data may comprise an indication of a destination floor predetermined for the user to which the user authorization data relates. Figure 7C illustrates schematically an example access control situation, wherein the access granted guidance 720 comprises the elevator car allocation information. The elevator car allocation information may for example comprise an identifier of the allocated elevator car, a guidance to the allocated elevator car (e.g. an arrow directing to the allocated elevator car), and/or a destination floor. In the example of Figure 7C the elevator car allocation information comprised in the access granted guidance 720 comprises the identifier of the allocated elevator car (i.e. elevator car "C"), the destination floor (i.e. floor 7), and an arrow directing to the allocated elevator car.

Alternatively, if the user authorization data indicates that the detected user 710 is an unauthorized user, the control unit 230 controls the projector device 210 (e.g. by generating at least one control signal) to project an access denied guidance 730 on the floor 320 at the exit zone 420a of the access control lane 310a. Figure 7D illustrates schematically an example access control situation, wherein the access denied guidance 730 is projected on the floor 320 at the exit zone 420a of the access control lane 310a. The access denied guidance 730 indicates that the access of the user 710 is denied, i.e. the user 710 is not allowed to access through the user entry point along the exit zone 420a of the access control lane 310a. The access denied guidance 730 may for example comprise a text indicating the denied access, a pattern indicating the denied access, and/or a color indicating the denied access. For example, the access denied guidance 730 may comprise a text "access denied" as illustrated in the example of Figure 7D. Alternatively or in addition, the exit zone 420a may be projected on the floor 320 with a specific color, e.g. red, to indicate the denied access.

Alternatively, if the user 710 is further detected to entry into the exit zone 420a of the access control lane 310a based on the detection data provided by the camera device 220 and the user authorization data is not provided by the reader device arrangement 240 of the reader support structure 330a of the access control lane 310a, the control unit 230 controls the projector device 210 to project the access denied guidance 730 on the floor 320 at the exit zone 420a of the access control lane 310a.

According to an example, the control unit 230 may control the projector device 210 to project additional guidance information 740 on the floor 320 at the entry zone 410a and/or at the exit zone 420a of the access control lane 310a. Figure 7E illustrates schematically an example access control situation, wherein the additional guidance information 740 is projected on the floor 320 at the entry zones 410a, 410a of the access control lanes 310a, 310b. The additional guidance information 740 projected at the entry zone 410a may for example comprise a text indicating entry information, a pattern indicating entry information, and/or a color indicating entry information. For example, the additional guidance information 740 may comprise an arrow indicating the entry direction as illustrated in the example of Figure 7E. The additional guidance information may be projected after detecting the user 710 within the entry zone 410a of the access control lane 310a. Alternatively or in addition, the additional guidance information may be projected before detecting the user 710 within the entry zone 410a, of the access control lane 310a. According to an example, the projection of the additional guidance information by the projector device 210 on the floor 320 at the entry zones 410a, 410a of the access control lanes 310a, 310b may be dynamically controlled by the control unit 230. The dynamically controlled projection of the additional guidance information may preferably be projected before detecting the user within the entry zone 410a, 410b. The dynamical control of the projection of the additional guidance information may for example be based on overall traffic data in the vicinity of the user entry point. The dynamical control of the projection of the additional guidance information on the floor 320 at the entry zones 410a, 410a of the access control lanes 310a, 310b enables a dynamical guidance of the users to the access control lanes 310a, 310b based on the overall traffic.

According to another example, if the access control lane 310a comprises further the at least one other zone, e.g. the center zone, the control unit 230 may further control the projector device 210 to project guidance information on the floor 320 at the at least other zone.

According to yet another example, if an unauthorized user 710 or a user 710 without providing the user authorization data is detected to entry into the exit zone 420a of the access control lane 310a based on detection data provided by the camera device 220, the control unit 230 may control the projector device 210 further to project a sign on the user 710 and/or on the floor 320 in the vicinity of the user 710 (e.g. around the user 710), in addition to the controlling the projector device 210 to project the access denied guidance 730 on the floor 320 at the exit zone 420a of the access control lane 310a. The control unit 230 may continue controlling the projector device 210 to project the sign on the user 710 and/or on the floor 320 in the vicinity of the user 710, when the user 710 moves within operation ranges of the projector device 210 and the camera device 220. The projected sign may be used to tag a user 710, who is not allowed to access through the user entry point, but who has entered the exit zone 420a of the access control lane 310a. This makes it easier to stop such a user. The projected sign may for example comprise a specific pattern and/or a specific color. For example, the projected sign may be a big red dot projected on the user 710 and/or on the floor 320 around the user 710.

Each reader support structure 330a, 330b may further comprise a restriction device 810a, 810b for restricting access of unauthorized users into the exit zone 420a, 420b of the respective access control lane 310a, 310b. The restriction device 810a, 810b may for example comprise a door panel(s), a barrier(s), or any other physical user restriction device. The restriction device 810a, 810b provides a physical restriction to restrict access of unauthorized users into the exit zone 420a. When the reader support structure 330a, 330b comprises the restriction device 810a, 810b, the restriction device 810a, 810b may divide the access control lane 310a, 310b into the entry zone 410a, 410b, and the exit zone 420a, 420b. When the reader support structure 330a, 330b comprises the restriction device 810a, 810b, the reader support structure 330a, 330b may be arranged between the entry zone 410a, 410b and the exit zone 420a, 420b of the respective access control lane 310a, 310b. According to an example, if the access control lanes 310a, 310b comprise the center zone between the entry zone 410a, 410b and the exit zone 420a, 420b, each reader support structure 330a, 330b comprising the restriction device 810a, 810b may be arranged at the center zone of the respective access control lane 310a, 310b, e.g. on one of the sides of the respective center zone. Figure 8 illustrates schematically an example of the reader support structures 330a, 330b comprising restriction devices 810a, 810b.

The control of the access of the users through the user entry point along each access control lane 310a, 310b may comprise that the control unit 230 may further control the restriction device 810a, 810b (e.g. by generating at least one control signal) based on the user authorization data relating to the detected user 710 provided by the reader device arrangement 240 of the reader support structure 330a, 330b of the access control lane 310a, 310b. Next the control, by the control unit 230, of the restriction device 810a of the reader support structure 330a of one access control lane 310a is described. However, the control of the restriction devices 810a, 810b of the reader support structures 330a, 330b of the other access control lanes 310a, 310b may be performed by the control unit 230 similarly.

If the user authorization data indicates that the detected user 710 is an authorized user, the control unit 230 may control the restriction device 810a to allow access for the detected user 710 into the exit zone 420a of the access control lane 310a. The restriction device 810a may initially be closed, i.e. the restriction device 810a is maintained closed and the restriction device 810a is opened to allow access into the exit zone 420a. Alternatively, the restriction device 810a may initially be open, i.e. the restriction device 810a is maintained open and the restriction device 810a is closed to restrict the access into the exit zone 420a. If the restriction device 810a is initially closed, the control of the restriction device 810a by the control unit 230 to allow the access for the detected user into the exit zone 420a may comprise opening the restriction device 810a. If the restriction device 810a is initially open, the control of the restriction device 810a by the control unit 230 to allow the access for the detected user into the exit zone 420a may comprise maintaining the restriction device 810a open.

Alternatively, if the user authorization data indicates that the detected user 710 is an unauthorized user, the control unit 230 may control the restriction device 810a to restrict the access of the detected user 710 into the exit zone 420a of the access control lane 310a. If the restriction device 810a is initially closed, the control of the restriction device 810a by the control unit 230 to restrict the access of the detected user 710 into the exit zone 420a may comprise maintaining the restriction device 810a closed. If the restriction device 810a is initially open, the control of the restriction device 810a by the control unit 230 to restrict the access of the detected user 710 into the exit zone 420a may comprise closing the restriction device 810a.

Alternatively, if the user authorization data is not provided by the access reader device arrangement 240 of the reader support structure 330a of the access control lane 310a, the control unit 230 may control the restriction device 810a to restrict access of the detected user 710 into the exit zone 420a of the access control lane 310a. If the restriction device 810a is initially closed, the control of the restriction device 810a by the control unit 230 to restrict the access of the detected user 710 into the exit zone 420a may comprise maintaining the restriction device 810a closed. If the restriction device 810a is initially open, the control of the restriction device 810a by the control unit 230 to restrict the access of the detected user 710 into the exit zone 420a may comprise closing the restriction device 810a.

According to an example, the access control unit 200 may further comprise a facial recognition camera device 250 configured to provide facial recognition data for a facial recognition -based identification of the detected user 710. The facial recognition camera device 250 may for example be arranged to the ceiling, e.g. to hang from the ceiling. The facial recognition camera device 250 may be arranged to the ceiling so that it produce the facial recognition data from the at least two access control lanes 310a, 310b.

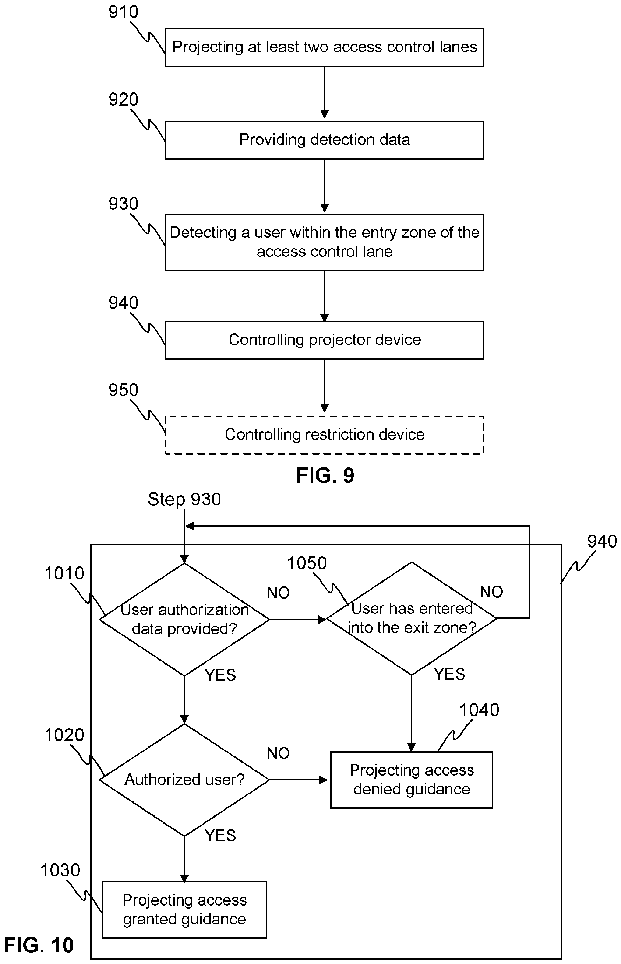

Figure 9 illustrates schematically a flow chart of an example of an access control method performed by the access control system 200 described above.

At a step 910, the projector device 210 projects at least two access control lanes 310a, 310n on the floor 320. As discussed above, each access control lane 310a, 310b projected by the projector device 210 comprises at least the entry zone 410a, 410b and the exit zone 420a, 420b and a reader support structure 330a, 330b is arranged for each access control lane 310a, 310b.

At a step 920, the camera device 220 provides detection data from the projected at least two access control lanes 310a, 310b.

As described above, the control unit 230 controls the access of the users through the user entry point along the two access control lanes 310a, 310b projected by the projector device 210. Next the steps of controlling, by the control unit 230, of the access of a user 710 through the user entry point along one access control lane 310a is described. However, the steps of controlling of the access of along the other access control lanes 310a, 310b may be performed by the control unit 230 similarly.

At a step 930, the control unit 230 detects the user 710 within the entry zone 410a of the access control lane 310a based on the detection data provided by the camera device 220 as described above.

At a step 940, the control unit 230 controls the projector device 210 based on user authorization data relating to the detected user 710 provided by the reader device arrangement 240 of the reader support structure 330a of the access control lane 310a and/or the detection data provided by the camera device 220 as described above.

At an optional step 950, the control unit 230 may further control the restriction device 810a based on the user authorization data relating to the detected user 710 provided by the reader device arrangement 240 of the reader support structure 330a of the access control lane 310a, if the reader support structure 330a further comprises the restriction device 810a for restricting access of unauthorized users into the exit zone 420a of the access control lane 310a.

Figure 10 schematically illustrates the step 940, i.e. the controlling of the projector device 210, of the flow chart of Figure 9 in more detailed manner.

At a step 1010, the control unit 230 may check whether the user authorization data is provided by the reader device arrangement 240 of the reader support structure 330a of the access control lane 310a.

If the user authorization data is provided, next the control unit 230 may define at a step 1020 whether the provided user authorization data indicates that the detected user 710 is an authorized user or an authorized user.

At a step 1030, the control unit 230 may control the projector device 210 to project an access granted guidance 720 on the floor 320 at the exit zone 420a of the access control lane 310a, if the user authorization data indicates that the detected user 710 is an authorized user as discussed above referring to Figure 7B.

At a step 1040, the control unit 230 may control the projector device 210 to project access denied guidance 730 on the floor 320 at the exit zone 420a of the access control lane 310a, if the user authorization data indicates that the detected user 710 is an unauthorized user as discussed above referring to Figure 7D.

If the user authorization data is not provided and the control unit 230 further detects at a step 1050 based on the detection data provided by the camera device 220 that the user 710 has entered into the exit zone 420a of the access control lane 310a, the control unit 230 may control at the step 1040 the projector device 210 to project the access denied guidance 730 on the floor 320 at the exit zone 420a of the access control lane 310a as discussed above.

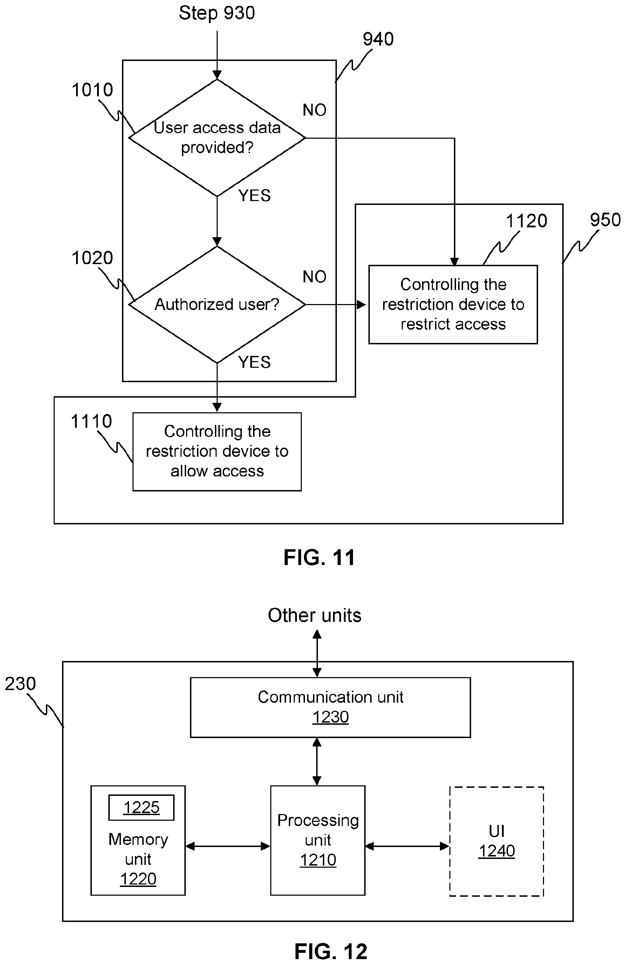

Figure 11 schematically illustrates the step 950, i.e. the controlling of the restriction device 810a, of the flow chart of Figure 9 in more detailed manner.

As discussed above, at the step 1010, the control unit 230 checks whether the user authorization data is provided by the reader device arrangement 240 of the reader support structure 330a of the access control lane 310a.

If the user authorization data is provided, next the control unit 230 defines at the step 1020 whether the provided user authorization data indicates that the detected user 710 is an authorized user or an authorized user.

At the step 1110, the control unit 230 may control the restriction device 810a, to allow access for the detected user 710 into the exit zone 420a of the access control lane 310a, if the user authorization data indicates that the detected user 710 is an authorized user as discussed above.

At a step 1120, the control unit 230 may control the restriction device 810a to restrict the access of the detected user 710 into the exit zone 420a of the access control lane 310a, if the user authorization data indicates that the detected user 710 is an unauthorized user as discussed above.

If the user authorization data is not provided, the control unit 230 may control at the step 1120 the restriction device 810a to restrict access of the detected user 710 into the exit zone 420a of the access control lane 310a as discussed above.

According to an example, the access control method may further comprise providing facial recognition data, by the facial recognition camera device 250, for the facial recognition -based identification of the detected user 710.

According to another example, the access control method may alternatively or in addition comprise controlling, by the control unit 230, the projector device 210 to project additional guidance information 740 on the floor 320 at the entry zone 410a and/or at the exit zone 420a of the access control lane 310a as discussed above.

According to yet another example, if the access control lane 310a comprises further the at least one other zone, e.g. the center zone, the access control method may alternatively or in addition comprise controlling, by the control unit 230, the projector device 210 to project guidance information on the floor 320 at the at least other zone.

According to yet another example, if an unauthorized user 710 or a user 710 without providing the user authorization data is detected to entry into the exit zone 420a of the access control lane 310a based on detection data provided by the camera device 220, the access control method may alternative or in addition, comprise controlling, by the control unit 230, the projector device 210 further to project a sign on the user 710 and/or on the floor 320 in the vicinity of the user 710 (e.g. around the user 710), in addition to the controlling the projector device 210 to project the access denied guidance 730 on the floor 320 at the exit zone 420a of the access control lane 310a as discussed above.

Figure 12 illustrates schematically an example of components of the control unit 230. The control unit 230 may comprise a processing unit 1210 comprising one or more processors, a memory unit 1220 comprising one or more memories, a communication interface unit 1230, and possibly a user interface (III) unit 1240. The mentioned elements may be communicatively coupled to each other with e.g. an internal bus. The memory unit 1220 may store and maintain portions of a computer program (code) 1225 and any other data, e.g. user authorization data, detection data, and/or facial recognition data. The computer program 1225 may comprise instructions which, when the computer program 1225 is executed by the processing unit 1210 of the control unit 230 may cause the processing unit 1210, and thus the control unit 230 to carry out desired tasks, e.g. the operations of the control unit 230 and/or at least some of the method steps described above. The processing unit 1210 may thus be arranged to access the memory unit 1220 and retrieve and store any information therefrom and thereto. For sake of clarity, the processor herein refers to any unit suitable for processing information and control the operation of the control unit 230, among other tasks. The operations may also be implemented with a microcontroller solution with embedded software. Similarly, the memory unit 1220 is not limited to a certain type of memory only, but any memory type suitable for storing the described pieces of information may be applied in the context of the present invention. The communication interface unit 1230 provides an interface for communication with any external unit, e.g. the projector device 210, the camera device 220, the reader device arrangement 240, the facial recognition camera device 250, one or more databases, and/or any other external unit. The communication interface unit 1230 may comprise one or more communication devices, for communication with the other units. The one or more user interface units 1240 may comprise one or more input/output (I/O) devices, such as buttons, keyboard, touch screen, microphone, loudspeaker, display and so on, for receiving user input and outputting information. The computer program 1225 may be a computer program product that may be comprised in a tangible non-volatile (non-transitory) computer-readable medium bearing the computer program code 1225 embodied therein for use with a computer, i.e. the control unit 230.

The specific examples provided in the description given above should not be construed as limiting the applicability and/or the interpretation of the appended claims. Lists and groups of examples provided in the description given above are not exhaustive unless otherwise explicitly stated.

## Claims

1. An access control system (200) comprising:
a projector device (210) configured to project at least two access control lanes (310a, 310b) on a floor (320), wherein each access control lane (310a, 310b) comprises an entry zone (410a, 410b) and an exit zone (420a, 420b);
a reader support structure (330a, 330b) for each access control lane (310a, 310b), wherein each reader support structure comprises a reader device arrangement (240) configured to provide user authorization data;
a camera device (220) configured to provide detection data from the at least two access control lanes (310a, 310b); and
a control unit (230) configured to control access of users along the two access control lanes (310a, 310b), wherein the control of the access of the users along each access control lane (310a, 310b) comprises that the control unit (230) is configured to:
detect a user (710) within the entry zone (410a, 410b) of the access control lane (310a, 310b) based on the detection data provided by the camera device (220), and
control the projector device (210) based on user authorization data relating to the detected user (710) provided by the reader device arrangement (240) of the reader support structure (330a, 330b) of the access control lane (310a, 310b) and/or the detection data provided by the camera device (220).

2. The access control system (200) according to claim 1, wherein the controlling the projector device (210) comprises that the control unit (230)is configured to:
control the projector device (210) to project access granted guidance (720) on the floor (320) at the exit zone (420a, 420b) of the access control lane (310a, 310b), if the user authorization data indicates that the detected user (710) is an authorized user;
control the projector device (210) to project access denied guidance (730) on the floor (320) at the exit zone (420a, 420b) of the access control lane (310a, 310b), if the user authorization data indicates that the detected user (710) is an unauthorized user; or
control the projector device (210) to project the access denied guidance (730) on the floor (320) at the exit zone (420a, 420b) of the access control lane (310a, 310b), if the detected user (710) is further detected to entry into the exit zone (420a, 420b) of the access control lane (310a, 310b) based on the detection data provided by the camera device (220) and the user authorization data is not provided by the reader device arrangement (240) of the reader support structure (330a, 330b) of the access control lane (310a, 310b).

3. The access control system (200) according to any of the preceding claims, wherein each reader support structure (330a, 330b) further comprises a restriction device (810a, 810b) for restricting access of unauthorized users into the exit zone (420a, 420b) of the respective access control lane (310a, 310b), and wherein the control of the access along each access control lane (310a, 310b) comprises that the control unit (230) is further configured to control the restriction device (810a, 810b) based on the user authorization data relating to the detected user (710) provided by the reader device arrangement (240) of the reader support structure (330a, 330b) of the access control lane (310a, 310b).

4. The access control system (200) according to claim 3, wherein the controlling the restriction device (810a, 810b) comprises that the control unit (230) is configured to:
control the restriction device (810a, 810b) to allow access for the detected user (710) into the exit zone (420a, 420b) of the access control lane (310a, 310b), if the user authorization data indicates that the detected user (710) is an authorized user;
control the restriction device (810a, 810b) to restrict access of the detected user (710) into the exit zone (420a, 420b) of the access control lane (310a, 310b), if the user authorization data indicates that the detected user (710) is an unauthorized user; or
control the restriction device (810a, 810b) to restrict access of the detected user (710) into the exit zone (420a, 420b) of the access control lane (310a, 310b), if the user authorization data is not provided by the reader device arrangement (240) of the reader support structure (330a, 330b) of the access control lane (310a, 310b).

5. The access control system (200) according to any of the preceding claims further comprising a facial recognition camera device (250) configured to provide facial recognition data for a facial recognition -based identification of the detected user (710).

6. The access control system (200) according to any of the preceding claims, wherein the camera device (220) is a 2D camera, a time-of-flight (ToF) camera, or a stereo camera.

7. The access control system (200) according to any of the preceding claims, wherein the reader device arrangement (240) of each reader support structure (330a, 330b) comprises: a quick response (QR) code reader device, a radio frequency identification (RFID) reader device, a near-field communication (NFC) reader device, and/or an identification card (ID card) reader device.

8. An access control method comprising:
projecting (910), by a projector device (210), at least two access control lanes (310a, 310b) on a floor (320), wherein each access control lane (310a, 310b) comprises an entry zone (410a, 410b) and an exit zone (420a, 420b), wherein
a reader support structure (330a, 330b) is arranged for each access control lane (310a, 310b), each reader support structure (330a, 330n) comprises a reader device arrangement (240) for providing user authorization data;
providing (920), by a camera device (220), detection data from the at least two access control lanes (310a, 310b); and
controlling, by a control unit (230), access of users along the two access control lanes (310a, 310b), wherein the controlling the access of the users along each access control lane (310a, 310b) comprises:
detecting (930), by the control unit (230), a user (710) within the entry zone (410a, 410b) of the access control lane (310a, 310b) based on the detection data provided by the camera device (220); and
controlling (940), by the control unit (230), the projector device (210) based on user authorization data relating to the detected user (710) provided by the reader device arrangement (240) of the reader support structure (330a, 330b) of the access control lane (310a, 310b) and/or the detection data provided by the camera device (220).

9. The method according to claim 8, wherein the controlling (940) the projector device (210) comprises:
controlling (1030), by the control unit (230) the projector device (210) to project access granted guidance (720) on the floor (320) at the exit zone (420a, 420b) of the access control lane (310a, 310b), if the user authorization data indicates that the detected user (710) is an authorized user;
controlling (1040), by the control unit (230), the projector device (210) to project access denied guidance (730) on the floor (320) at the exit zone (420a, 420b) of the access control lane (310a, 310b), if the user authorization data indicates that the detected user (710) is an unauthorized user; or
controlling (1040), by the control unit (230), the projector device (210) to project the access denied guidance (730) on the floor (320) at the exit zone (420a, 420b) of the access control lane (310a, 310b), if the detected user (710) is further detected to entry into the exit zone (420a, 420b) of the access control lane (310a, 310b) based on the detection data provided by the camera device (220) and the user access data is not provided by the reader device arrangement (240) of the reader support structure (330a, 330b) of the access control lane (310a, 310b).

10. The method according to any of claims 8 or 9, wherein the controlling the access of the users along each access control lane (310a, 310b) further comprises controlling (950), by the control unit (230), a restriction device (810a, 810b) of the reader support structure (330a, 330b) based on the user authorization data relating to the detected user (710) provided by the reader device arrangement (240) of the reader support structure (330a, 330b) of the access control lane (310a, 310b).

11. The method according to claim 10, wherein the controlling (950) the restriction device (810a, 810b) comprises:
controlling (1110), by the control unit (230), the restriction device (810a, 810b) to allow access for the detected user (710) into the exit zone (420a, 420b) of the access control lane (310a, 310b), if the user authorization data indicates that the detected user (710) is an authorized user;
controlling (1120), by the control unit (230), the restriction device (810a, 810b) to restrict access of the detected user (710) into the exit zone (420a, 420b) of the access control lane (310a, 310b), if the user authorization data indicates that the detected user (710) is an unauthorized user; or
controlling (1120), by the control unit (230), the restriction device (810a, 810b) to restrict access of the detected user (710) into the exit zone (420a, 420b) of the access control lane (310a, 310b), if the user authorization data is not provided by the access reader device arrangement (240) of the reader support structure (330a, 330b) of the access control lane (310a, 310b).

12. The method according to any of claims 8 to 11 further comprising providing facial recognition data, by a facial recognition camera device (250), for a facial recognition -based identification of the detected user (710).

13. The method according to any of claims 8 to 12, wherein the camera device (220) is 2D camera, a time-of-flight (ToF) camera, or a stereo camera.

14. The method according to any of claims 8 to 13, wherein the reader device arrangement (240) of each reader support structure (330a, 330b) comprises: a quick response (QR) code reader device, a radio frequency identification (RFID) reader device, a near-field communication (NFC) reader device, and/or an identification card (ID card) reader device.
